# EUROPEAN PATENT APPLICATION

(11) **EP 4 821 962 A1**
(43) Date of publication of application: **14.10.2026**
(21) Application number: 24900441.7
(22) Date of filing: 21.11.2024
(51) Int. Cl.: C08G 18/10, B32B 27/00, B32B 27/40, B65D 65/40, C08G 18/32, C08G 18/76, C09J 175/04

(54) **METHOD FOR PRODUCING POLYURETHANE POLYISOCYANATE**

(30) Priority: 07.12.2023 JP 2023206790
(71) Applicant: DIC Corporation, Tokyo 174-8520 (JP)
(72) Inventor: TESHIMA, Tsuneyuki, Tokyo 174-8520 (JP); HIROTA, Yasunobu, Tokyo 174-8520 (JP)
(74) Representative: Kraus & Lederer PartGmbB
(86) International application number: PCT/JP2024/041205
(87) International publication number: WO 2025/121146

(57) **Abstract**

Provided is a method for producing a polyurethane polyisocyanate having stabilized quality without disposing of the unreacted isocyanate monomer discharged from the production process. A method for producing a polyurethane polyisocyanate, comprising the steps of: reacting a TDI (o) having a 2,4-TDI content of 50 to 90% by mass and a polyol (p) to obtain a composition comprising a polyurethane polyisocyanate (A1) and a TDI (o') (step 1); removing the TDI (o') from the composition obtained in the step 1 (step 2); reacting a TDI (q), which is obtained by adding 2,4-TDI to at least part of the TDI (o') so that the resultant TDI (q) has a 2,4-TDI content of 50 to 90% by mass, and a polyol (r) to obtain a composition comprising a polyurethane polyisocyanate (A2) and a TDI (q') (step 3); and removing the TDI (q') from the composition obtained in the step 3 (step 4).

## Description

### TECHNICAL FIELD

The present invention relates to a method for producing a polyurethane polyisocyanate.

### BACKGROUND ART

Laminated materials are used in various types of packaging materials, labels, and the like, and lamination of substrates for the laminated materials, such as a variety of plastic films, metal foils, and paper, imparts design properties, functions, storage properties, convenience, transportability, and the like to the laminated materials. Packaging materials obtained by forming the laminated material into a bag form are used as packaging materials in various fields, such as packaging materials for foods, pharmaceuticals, detergents, and the like. In the production of such laminated materials, adhesives of a urethane reactive two-pack type (hereinafter, frequently referred to as "two-pack curing-type adhesive" or "reactive adhesive") have been generally used.

Among the urethane reactive two-pack curing-type adhesives, there are those which use a component containing an isocyanate monomer in a certain amount, such as an isocyanate prepolymer, and, from the viewpoint of the safety and hygiene of labor, there is a trend towards regulation of the use of the isocyanate monomer. The European Commission adopted the REACH regulation that prohibits adhesive products containing an isocyanate monomer in an amount of 0.1% by mass or more from coming into the market when the products do not satisfy the predetermined requirements.

There is further concern about the isocyanate monomer. When producing a laminated material for food packaging using a two-pack curing-type adhesive containing an aromatic isocyanate prepolymer, the unreacted aromatic isocyanate monomer is likely to be remain in the adhesive layer. There is a danger that the isocyanate monomer reacts with water present around the isocyanate monomer to form a primary aromatic amine (PAA), and the PAA moves through the film of the packaging material and is dissolved in the contents (food). The worry is that the PAA is harmful to human body, and the European Commission provides regulations, for example, that the limit of detection of PAA is determined in the rules of plastic materials that are to be in contact with food and products thereof.

A PAA reacts with the unreacted aromatic isocyanate present around the PAA, and therefore, even when the aromatic isocyanate remains in the adhesive layer, the concentration of the PAA is gradually lowered. The PAA concentration is eventually reduced to less than the limit of detection, but, from the viewpoint of the production efficiency of a laminated material for food packaging, the initial value of the amount of the aromatic isocyanate monomer remaining in the adhesive layer is preferably lower.

The method for reducing the isocyanate monomer content has conventionally been studied.

For example, PTL 1 discloses a method for forming an isocyanate functional prepolymer having a low isocyanate residue, the method comprising: (a) reacting a polyol selected from the group consisting of a polyether polyol, a polyester polyol, a polyester polyether polyol, an acrylic polyol, a glycol, and a mixture thereof, and an isocyanate monomer to form a reaction mixture containing a prepolymer having 2.0 to 3.0 NCO functional groups on average and having an NCO content of 2.5 to 11.5% by weight; and (b) passing the reaction mixture containing the prepolymer and unreacted isocyanate through a short-path evaporator to remove the unreacted isocyanate so that the unreacted isocyanate content of the mixture is reduced to less than 0.15% by weight.

### CITATION LIST

### PATENT LITERATURE

PTL 1: JP2002-265552A

### SUMMARY OF INVENTION

### TECHNICAL PROBLEM

When the residual isocyanate monomer is removed from the isocyanate functional prepolymer by the above-mentioned method, the unreacted isocyanate monomer is discharged from the production process. There is a need for a method for producing a polyurethane polyisocyanate having stabilized quality without disposing of such an unreacted isocyanate monomer discharged from the production process.

In view of the above, the present invention has been made, and an object of the present invention is to provide a method for producing a polyurethane polyisocyanate having stabilized quality without disposing of the unreacted isocyanate monomer discharged from the production process.

### SOLUTION TO PROBLEM

Specifically, the present invention is directed to a method for producing a polyurethane polyisocyanate, comprising the steps of:
reacting a toluene diisocyanate (o), which comprises 2,4-toluene diisocyanate and 2,6-toluene diisocyanate and which has a 2,4-toluene diisocyanate content of 50 to 90% by mass, and a polyol (p) under conditions wherein the amount of the isocyanate groups of the toluene diisocyanate (o) is two times or more that of the hydroxyl groups of the polyol (p), obtaining a composition comprising a polyurethane polyisocyanate (A1) and a toluene diisocyanate (o') (step 1);
removing the toluene diisocyanate (o') from the composition obtained in the step 1 (step 2);
reacting a toluene diisocyanate (q), which is obtained by adding 2,4-toluene diisocyanate to at least part of the toluene diisocyanate (o') so that the resultant toluene diisocyanate (q) has a 2,4-toluene diisocyanate content of 50 to 90% by mass, and a polyol (r) under conditions wherein the amount of the isocyanate groups of the toluene diisocyanate (q) is two times or more that of the hydroxyl groups of the polyol (r), obtaining a composition comprising a polyurethane polyisocyanate (A2) and a toluene diisocyanate (q') (step 3); and
removing the toluene diisocyanate (q') from the composition obtained in the step 3 (step 4).

### ADVANTAGEOUS EFFECTS OF INVENTION

In the present invention, there can be provided a method for producing a polyurethane polyisocyanate having stabilized quality without disposing of the unreacted isocyanate monomer discharged from the production process.

### DESCRIPTION OF EMBODIMENTS

### <Method for producing a polyurethane polyisocyanate (A)>

The method for producing a polyurethane polyisocyanate (A) of the present invention comprises the steps described below.

### (Step 1)

The step 1 is the step of reacting a toluene diisocyanate (o) and a polyol (p) under conditions wherein the amount of the isocyanate groups of the toluene diisocyanate (o) is two times or more, more preferably 2 to 20 times that of the hydroxyl groups of the polyol (p), obtaining a composition comprising a polyurethane polyisocyanate (A1) and a toluene diisocyanate (o') that corresponds to the unreacted toluene diisocyanate (o) which has not been reacted with the polyol (p).

The toluene diisocyanate (o) is a mixture of 2,4-toluene diisocyanate and 2,6-toluene diisocyanate, and the toluene diisocyanate (o) has a 2,4-toluene diisocyanate content of 50 to 90% by mass, more preferably 60 to 80% by mass. Such a toluene diisocyanate (o) has excellent handling properties, and enables efficient production of a polyurethane polyisocyanate (A).

With respect to the polyol (p), a conventionally known polyol can be used. Examples of such polyols include:
glycols, such as ethylene glycol, 1,2-propanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, and 1,4-cyclohexanedimethanol;
trifunctional or tetrafunctional aliphatic alcohols, such as glycerol, trimethylolpropane, and pentaerythritol;
bisphenols, such as bisphenol A, bisphenol F, hydrogenated bisphenol A, and hydrogenated bisphenol F;
a dimer diol;
a polyether polyol obtained by subjecting an alkylene oxide, such as ethylene oxide, propylene oxide, butylene oxide, styrene oxide, epichlorohydrin, tetrahydrofuran, or cyclohexylene, to addition polymerization in the presence of a polymerization initiator, such as glycol or a trifunctional or tetrafunctional aliphatic alcohol;
a polyester polyol (1) which is a reaction product of a polyester obtained by a ring-opening polymerization reaction of a cyclic ester compound, such as propiolactone, butyrolactone, ε-caprolactone, σ-valerolactone, or β-methyl-σ-valerolactone, and a polyhydric alcohol, such as the glycol, glycerol, trimethylolpropane, or pentaerythritol;
a polyester polyol (2) obtained by reacting a bifunctional polyol, such as glycol, dimer diol, or bisphenol, and a polycarboxylic acid;
a polyester polyol (3) obtained by reacting a trifunctional or tetrafunctional aliphatic alcohol and a polycarboxylic acid;
a polyester polyol (4) obtained by reacting a bifunctional polyol, a trifunctional or tetrafunctional aliphatic alcohol, and a polycarboxylic acid;
a polyester polyol (5) which is a polymer of a hydroxy acid, such as dimethylolpropionic acid or castor oil fatty acid;
a polyurethane polyol (1) obtained by increasing at least one member selected from a bifunctional polyol and a trifunctional or tetrafunctional aliphatic alcohol in molecular weight using an isocyanate compound;
a polyether urethane polyol (2) obtained by further increasing a polyether polyol in molecular weight using an isocyanate compound;
a polyester polyurethane polyol (3) obtained by increasing the polyester polyol (1) to (5) in molecular weight using an isocyanate compound;
a polyester polyether polyurethane polyol (4) obtained by reacting at least one member of the polyester polyols (1) to (5), a polyether polyol, and an isocyanate compound;
castor oil, dehydrated castor oil, castor hardened oil which is a hydrogenation product of castor oil, castor oil polyols, such as a 5- to 50-mol alkylene oxide addition product of castor oil, and a mixture thereof, and these polyols can be used individually or in combination.

Examples of polycarboxylic acids used in the synthesis of the polyester polyols (2) to (4) include aromatic polybasic acids, such as orthophthalic acid, terephthalic acid, isophthalic acid, phthalic anhydride, 1,4-naphthalenedicarboxylic acid, 2,5-naphthalenedicarboxylic acid, 2,6-naphthalenedicarboxylic acid, 2,3-naphthalenedicarboxylic anhydride, naphthalic acid, trimellitic acid, trimellitic anhydride, pyromellitic acid, pyromellitic anhydride, biphenyldicarboxylic acid, 1,2-bis(phenoxy)ethane-p,p'-dicarboxylic acid, benzophenonetetracarboxylic acid, benzophenonetetracarboxylic dianhydride, sodium 5-sulfoisophthalate, tetrachlorophthalic anhydride, and tetrabromophthalic anhydride; methyl esters of an aromatic polybasic acid, such as dimethyl terephthalate and dimethyl 2,6-naphthalenedicarboxylate;
aliphatic polybasic acids, such as malonic acid, succinic acid, succinic anhydride, glutaric acid, adipic acid, pimelic acid, suberic acid, azelaic acid, sebacic acid, fumaric acid, maleic acid, maleic anhydride, and itaconic acid;
alkyl esters of an aliphatic polybasic acid, such as dimethyl malonate, diethyl malonate, dimethyl succinate, dimethyl glutarate, dimethyl adipate, diethyl pimelate, diethyl sebacate, dimethyl fumarate, diethyl fumarate, dimethyl maleate, and diethyl maleate; and
alicyclic polybasic acids, such as 1,1-cyclopentanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, tetrahydrophthalic anhydride, 4-methylhexahydrophthalic anhydride, hexahydrophthalic anhydride, cyclohexane-1,2,4-tricarboxylic-1,2-anhydride, himic anhydride, and HET anhydride, and these polycarboxylic acids can be used individually or in combination.

With respect to the isocyanate compound used in the synthesis of the polyurethane polyols (1) to (4), known aromatic, aromatic aliphatic, aliphatic, or alicyclic diisocyanates can be used individually or in combination.

Examples of aromatic diisocyanates include 2,2'-diphenylmethane diisocyanate, 2,4'-diphenylmethane diisocyanate, 4,4'-diphenylmethane diisocyanate (referred to also as "MDI"), polymethylene polyphenyl polyisocyanate (referred to also as "polymeric MDI" or "crude MDI"), 1,3-phenylene diisocyanate, 4,4'-diphenyl diisocyanate, 1,4-phenylene diisocyanate (referred to also as "PPDI"), 2,4-tolylene diisocyanate, 2,6-tolylene diisocyanate (referred to also as "TDI"), 4,4'-toluidine diisocyanate, 2,4,6-triisocyanate toluene, 1,3,5-triisocyanate benzene, tolidine diisocyanate (referred to also as "TODI"), dianisidine diisocyanate, naphthalene diisocyanate (referred to also as "NDI"), 4,4'-diphenyl ether diisocyanate, and 4,4',4"-triphenylmethane triisocyanate, but the aromatic diisocyanate is not limited to these examples.

The aromatic aliphatic diisocyanate means an aliphatic isocyanate having one or more aromatic rings in the molecule thereof, and examples include m- or p-xylylene diisocyanate (referred to also as "XDI") and α,α,α',α'-tetramethylxylylene diisocyanate (referred to also as "TMXDI"), but the aromatic aliphatic diisocyanate is not limited to these examples.

Examples of aliphatic diisocyanates include trimethylene diisocyanate, tetramethylene diisocyanate, hexamethylene diisocyanate (referred to also as "HDI"), pentamethylene diisocyanate (referred to also as "PDI"), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (referred to also as "LDI"), but the aliphatic diisocyanate is not limited to these examples.

Examples of alicyclic diisocyanates include 3-isocyanate methyl-3,5,5-trimethylcyclohexyl isocyanate, isophorone diisocyanate (referred to also as "IPDI"), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebiscyclohexyl isocyanate (referred to also as "hydrogenated MDI" or "HMDI"), 1,3-bis(isocyanate methyl)cyclohexane (referred to also as "hydrogenated XDI" or "HXDI"), hydrogenated TMXDI, and norbornane diisocyanate (referred to also as "NBDI"), but the alicyclic diisocyanate is not limited to these examples.

The reaction of the polyisocyanate (o) and polyol (p) is, as an example, conducted at 50 to 100°C. The polyisocyanate (o) is charged into a reaction apparatus, and then heated to a predetermined temperature (step 1-1), and the polyol (p) is dropwise added to the polyisocyanate (o) over several hours (step 1-2). After completion of dropwise addition of the polyol (p), a urethane forming reaction is allowed to proceed for several hours (step 1-3). The period of time consumed by these steps can be appropriately controlled, but, as an example, the time for the step 1-1 can be controlled to be in the range of 30 minutes to 2 hours, the time for the step 1-2 can be controlled to be in the range of 1 to 5 hours, and the time for the step 1-3 can be controlled to be in the range of 1 to 10 hours. In this instance, a catalyst for urethane forming reaction may be used or may not be used. The step 1 is carried out until the urethane forming reaction has been completed, and, at a point in time when no change is found in the NCO% of the reaction system (a change of the NCO% after one hour falls in the range of ±0.05%), the step 1 is terminated.

### (Step 2)

In the step 2, the toluene diisocyanate (o') is removed from the composition comprising the polyurethane polyisocyanate (A1) and toluene diisocyanate (o') obtained in the step 1 to obtain a polyurethane polyisocyanate (A1) having an extremely reduced monomer diisocyanate content. Removal of the toluene diisocyanate (o') is made by distilling the toluene diisocyanate (o') under a reduced pressure using a short-path distillation apparatus, a thin-film distillation apparatus, or the like. The degree of vacuum and the distillation temperature are appropriately controlled, but, for example, the degree of vacuum is 0.1 mbar or less, and the distillation temperature is 120 to 190°C. The removed toluene diisocyanate (o') is temporarily stored.

The step 2 is conducted until, for example, the content of the toluene diisocyanate (o') in the total of the polyurethane polyisocyanate (A1) and the toluene diisocyanate (o') becomes 1.0% by mass or less. By virtue of this, the polyurethane polyisocyanate (A1) having excellent working atmosphere suitability can be obtained. It is preferred that the step 2 is conducted until the content of the toluene diisocyanate (o') in the total of the polyurethane polyisocyanate (A1) and the toluene diisocyanate (o') becomes 0.5% by mass or less, more preferably 0.1% by mass or less. The content of the toluene diisocyanate (o') can be measured in accordance with, for example, ASTM D 3432 by gas chromatography using an internal standard. Alternatively, the content of the toluene diisocyanate (o') can be measured by liquid chromatography under the following conditions.

Apparatus: "ACQUITY UPLC H-Class", manufactured by Waters Corporation
Data processing: "Empower-3", manufactured by Waters Corporation
Column: "ACQUITY UPLC HSS T3" (100 mm x 2.1 mmφ, 1.8 µm), manufactured by Waters Corporation, at 40°C
Eluent: Aqueous solution of ammonium formate/methanol, 0.3 mL/minute
Detector: PDA
Preparation of a sample: 1. Dissolving 100 mg of an appropriately blocked specimen in 10 ml of THF (for LC),
   2. stirring the resultant solution by a vortex mixer for 30 seconds,
   3. appropriately diluting the solution with an eluent (mobile phase), and
   4. passing the solution through a 0.2-µm filtration filter to obtain a sample for measurement.
Calculation of an area ratio: A calculation is made with respect to the object using a maximum absorption wavelength.

### (Step 3)

The step 3 is the step of reacting a toluene diisocyanate (q) and a polyol (r) under conditions wherein the amount of the isocyanate groups of the toluene diisocyanate (q) is two times or more, more preferably 2 to 20 times that of the hydroxyl groups of the polyol (r), obtaining a composition comprising a polyurethane polyisocyanate (A2) and a toluene diisocyanate (q') that corresponds to the unreacted toluene diisocyanate (q) which has not been reacted with the polyol (p).

The toluene diisocyanate (q) is obtained by adding 2,4-toluene diisocyanate and optionally 2,6-toluene diisocyanate to at least part of the toluene diisocyanate (o') recovered in the step 2 so that the resultant toluene diisocyanate (q) has a 2,4-toluene diisocyanate content of 50 to 90% by mass, more preferably 60 to 80% by mass.

With respect to the polyol (r), those mentioned above as examples of the polyol (p) can be used. These polyols may be used individually or in combination.

In the step 1, 2,4-toluene diisocyanate is preferentially consumed for a urethane forming reaction due to a difference in reactivity of the isocyanate groups of toluene diisocyanate at the 2-position, 4-position, and 6-position of toluene diisocyanate, and therefore the toluene diisocyanate (o') recovered in the step 2 has a low 2,4-toluene diisocyanate content, as compared to the toluene diisocyanate (o). 2,4-toluene diisocyanate and 2,6-toluene diisocyanate have different properties with respect to the symmetry, and therefore, when the toluene diisocyanate recovered in the step 2 is reused as such in the synthesis of a polyurethane polyisocyanate (A), there is a possibility that physical properties of the obtained polyurethane polyisocyanate (A) vary depending on the lots. Further, when all of the toluene diisocyanate used in the production of the polyurethane polyisocyanate (A) is comprised only of 2,4-toluene diisocyanate (or only of 2,6-toluene diisocyanate), such a toluene diisocyanate has poor handling properties, making it difficult to efficiently produce a polyurethane polyisocyanate (A).

In the invention, by reusing the toluene diisocyanate which is recovered while controlling the contents of 2,4-toluene diisocyanate and 2,6-toluene diisocyanate to be in the predetermined ranges, the polyurethane polyisocyanate (A) having suppressed a change of the physical properties can be efficiently produced.

The reaction of the polyisocyanate (q) and polyol (r) can be conducted in the same manner as in the step 1. In this instance, a catalyst for urethane forming reaction may be used or may not be used. The step 3 is carried out until the urethane forming reaction has been completed, and, at a point in time when no change is found in the NCO% of the reaction system (a change of the NCO% after one hour falls in the range of ±0.05%), the step 3 is terminated.

### (Step 4)

In the step 4, like the step 2, the toluene diisocyanate (q') is removed from the composition comprising the polyurethane polyisocyanate (A2) and toluene diisocyanate (q') obtained in the step 3 to obtain a polyurethane polyisocyanate (A2) having an extremely reduced monomer diisocyanate content. Removal of the toluene diisocyanate (q') is made by distilling the toluene diisocyanate (q') under a reduced pressure using a short-path distillation apparatus, a thin-film distillation apparatus, or the like. The degree of vacuum and the distillation temperature are appropriately controlled, but, for example, the degree of vacuum is 0.1 mbar or less, and the distillation temperature is 120 to 190°C. The removed toluene diisocyanate (q') is temporarily stored.

The step 4 is conducted until, for example, the content of the toluene diisocyanate (q') in the total of the polyurethane polyisocyanate (A2) and the toluene diisocyanate (q') becomes 1.0% by mass or less. It is preferred that the step 4 is conducted until the content of the toluene diisocyanate (o') in the total of the polyurethane polyisocyanate (A1) and the toluene diisocyanate (o') becomes 0.5% by mass or less, preferably 0.1% by mass or less.

The following steps are repeated. Like the step 3, the step of reacting a toluene diisocyanate (s), which is obtained by adding 2,4-toluene diisocyanate and optionally 2,6-toluene diisocyanate to at least part of the toluene diisocyanate (q') so that the resultant toluene diisocyanate (s) has a 2,4-toluene diisocyanate content of 50 to 90% by mass, more preferably 60 to 80% by mass, and a polyol (t) under conditions wherein the amount of the isocyanate groups of the toluene diisocyanate (s) is two times or more, more preferably 2 to 20 times that of the hydroxyl groups of the polyol (t), obtaining a composition comprising a polyurethane polyisocyanate (A3) and a toluene diisocyanate (s') that corresponds to the unreacted toluene diisocyanate (s) which has not been reacted with the polyol (t) (step 3') is conducted, and, similar to the step 4, the step of removing the toluene diisocyanate (s') from the composition comprising the polyurethane polyisocyanate (A3) and toluene diisocyanate (s') obtained in the step 3' to obtain the polyurethane polyisocyanate (A3) is conducted. By virtue of this, the polyurethane polyisocyanate (A) having stabilized physical properties can be efficiently produced.

### (Variation example)

In the method for producing a polyurethane polyisocyanate (A) of the invention, the produced polyurethane polyisocyanates (A1), (A2), (A3), and others may be the same or different from each other. For example, a mode may be employed in which all the polyols (p), (r), (t) are trimethylolpropane, and all the obtained polyurethane polyisocyanates (A1), (A2), (A3) are a reaction product of toluene diisocyanate and trimethylolpropane (so-called adduct compound of toluene diisocyanate and trimethylolpropane), or a mode may be employed in which the polyol (p) is trimethylolpropane, the polyol (r) is polyester polyol, and the polyol (t) is polyether polyol. Alternatively, a mode may be employed in which the polyol (p) is polyester polyol, the polyol (r) is a mixture of polyester polyol and polyether polyol, and the polyol (t) is polyether polyol.

The expression "the produced polyurethane polyisocyanates (A1) and (A2) are the same" means that a difference between the proportion of 2,4-toluene diisocyanate in the toluene diisocyanate (o) and the proportion of 2,4-toluene diisocyanate in the toluene diisocyanate (q) is within the range of an error of production (±5% by mass), and the proportion of the polyol constituting the polyol (p) in the polyol (p) and the proportion of the polyol constituting the polyol (r) in the polyol (r) are within the range of an error of production (±3% by mass), and a difference between the molar ratio of the isocyanate groups of the toluene diisocyanate (o) to the hydroxyl groups of the polyol (p) and the molar ratio of the isocyanate groups of the toluene diisocyanate (q) to the hydroxyl groups of the polyol (r) is within the range of an error of production (±0.2).

The toluene diisocyanates (o'), (q'), and (s') may be stored in the same container, or may be stored in different containers. The toluene diisocyanates recovered from the production process for the polyurethane polyisocyanate (A) of the same type may be stored in the same container, and the recovered toluene diisocyanate other than such toluene diisocyanates may be stored in a container different from the container for the other toluene diisocyanates.

In the steps 2, 4, and 4', the removals of the toluene diisocyanates (o'), (q'), and (s') may be individually conducted only once, or may be individually conducted two or more times (by passing the composition through two or more distillation apparatuses which are connected in series). For example, the removal may be conducted in such a way that a toluene diisocyanate (o'-1) is removed using a distillation apparatus 1 from the composition obtained in the step 1, and subsequently a toluene diisocyanate (o'-2) is removed using a distillation apparatus 2 from the composition containing the polyurethane polyisocyanate (A1) recovered from the distillation apparatus 1, obtaining the polyurethane polyisocyanate (A1) having a reduced residual isocyanate monomer amount.

In this instance, the toluene diisocyanate (o'-1) and the toluene diisocyanate (o'-2) may be recovered and stored in the same container, or may be recovered and stored in different containers. When the toluene diisocyanate (o'-1) and the toluene diisocyanate (o'-2) are stored in different containers, the toluene diisocyanate (q) may be prepared by adding 2,4-toluene diisocyanate and optionally 2,6-toluene diisocyanate to any one of the toluene diisocyanate (o'-1) and the toluene diisocyanate (o'-2), or may be prepared by adding 2,4-toluene diisocyanate and optionally 2,6-toluene diisocyanate to the toluene diisocyanate (o'-1) and toluene diisocyanate (o'-2).

The toluene diisocyanates (o'), (q'), and (s') recovered in the steps 2, 4, 4', and others may be purified before reused. As examples of purification methods, there can be mentioned filtration and distillation, but the purification method is not limited to these examples. In the purification step, a plurality of purification methods may be used in combination.

The polyurethane polyisocyanate (A) obtained in the steps 2, 4, 4', and others is, if necessary, diluted with an organic solvent before used.

### <Polyisocyanate composition>

The polyisocyanate composition of the invention comprises the polyurethane polyisocyanate (A) obtained by the above-described method. Further, the polyisocyanate composition may contain a polyisocyanate compound (B) other than the polyurethane polyisocyanate (A). Even when the polyisocyanate composition contains the polyisocyanate compound (B), the polyisocyanate composition has a diisocyanate monomer content of 1.0% by mass or less.

As examples of the polyisocyanate compounds (B), there can be mentioned a biuret compound, a nurate compound, an adduct compound, an allophanate compound, a carbodiimide-modified compound, an uretdione-modified compound, or the like of at least one diisocyanate selected from an aromatic diisocyanate, an aromatic aliphatic diisocyanate, an aliphatic diisocyanate, and an alicyclic diisocyanate. With respect to the polyisocyanate compound (B), the compounds can be used individually or in combination.

With respect to the aromatic diisocyanate, aromatic aliphatic diisocyanate, aliphatic diisocyanate, and alicyclic diisocyanate, those mentioned above as examples of the isocyanate compound used in the synthesis of the polyurethane polyols (1) to (4) (examples of the polyol (p)) can be used.

When the polyisocyanate composition (X) contains the polyisocyanate compound (B) in addition to the polyurethane polyisocyanate (A), the amount of the polyisocyanate compound (B) contained is appropriately controlled, but, as an example, the polyisocyanate compound (B) is contained in such an amount that the proportion of the polyurethane polyisocyanate (A) in the total of the polyurethane polyisocyanate (A) and the polyisocyanate compound (B) is 50% by mass or more.

The polyisocyanate composition of the invention may be diluted with an organic solvent, for example, an ester, such as ethyl acetate, butyl acetate, or cellosolve acetate; a ketone, such as acetone, methyl ethyl ketone, isobutyl ketone, or cyclohexanone; an ether, such as tetrahydrofuran or dioxane; an aromatic hydrocarbon, such as toluene or xylene; a halogenated hydrocarbon, such as methylene chloride or ethylene chloride; or dimethyl sulfoxide, or dimethylsulfonamide.

The polyisocyanate composition of the invention can be used in the form of a two-pack curing-type composition, which comprises a combination of the polyisocyanate composition and an isocyanate reactive composition containing a compound having reactivity with an isocyanate. Examples of the compounds having reactivity with an isocyanate include a polyether polyol, a polyester polyol, a polyester polyether polyol, a polyurethane polyol, a polyester polyurethane polyol, a polyether polyurethane polyol, a vegetable oil polyol, a sugar alcohol, a polycarbonate polyol, an acrylic polyol, a hydroxyl group-containing olefin resin, a hydroxyl group-containing fluororesin, and (a)an (poly)alkanolamine.

The two-pack curing-type composition can be used in, for example, an adhesive, a coating agent, a sealant, and an elastomer.

### <Adhesive>

The adhesive of the invention is a two-pack curing-type adhesive comprising a polyisocyanate composition (X) and a polyol composition (Y).

### (Polyisocyanate composition (X))

The polyisocyanate composition (X) comprises the above-described polyurethane polyisocyanate (A). Further, the polyisocyanate composition (X) may contain a polyisocyanate compound (B) other than the polyurethane polyisocyanate (A). As examples of the polyisocyanate compounds (B), there can be mentioned a biuret compound, a nurate compound, an allophanate compound, a carbodiimide-modified compound, an uretdione-modified compound, or the like of at least one diisocyanate selected from an aromatic diisocyanate, an aromatic aliphatic diisocyanate, an aliphatic diisocyanate, and an alicyclic diisocyanate. With respect to the polyisocyanate compound (B), the compounds can be used individually or in combination.

With respect to the aromatic diisocyanate, aromatic aliphatic diisocyanate, aliphatic diisocyanate, and alicyclic diisocyanate, those mentioned above as examples of the isocyanate compound used in the synthesis of the polyurethane polyols (1) to (4) (examples of the polyol (p)) can be used.

When the polyisocyanate composition (X) contains the polyisocyanate compound (B) in addition to the polyurethane polyisocyanate (A), the amount of the polyisocyanate compound (B) contained is appropriately controlled, but, as an example, the polyisocyanate compound (B) is contained in such an amount that the proportion of the polyurethane polyisocyanate (A) in the total of the polyurethane polyisocyanate (A) and the polyisocyanate compound (B) is 50% by mass or more.

With respect to the polyisocyanate composition (X) used in the adhesive of the invention, the content of a diisocyanate monomer, such as the aromatic diisocyanate, aromatic aliphatic diisocyanate, aliphatic diisocyanate, or alicyclic diisocyanate mentioned above as examples of the raw materials for the polyurethane polyisocyanate (A), in the polyisocyanate composition (X) is 1.0% by mass or less.

When the adhesive of the invention is used as a two-pack curing-type adhesive of a solvent-less type, the viscosity of the polyisocyanate composition (X) is controlled to be in the range suitable for a non-solvent lamination method. As an example, the viscosity of the polyisocyanate composition (X) at 40°C is controlled to be in the range of 100 to 50,000 mPas, more preferably 500 to 20,000 mPas. The viscosity of the polyisocyanate composition (X) can be controlled by, for example, appropriately selecting the structure of the polyurethane polyisocyanate (A) (or by appropriately selecting the polyol (p), (r), or (t) used) or by using the polyisocyanate compound (B) in combination with the polyurethane polyisocyanate (A). The viscosity of the polyisocyanate composition (X) can be measured, for example, using a rotational viscometer under conditions: cone & plate: 1° x diameter: 50 mm, shear rate: 100 sec⁻¹, and at 40±1°C.

### (Polyol composition (Y))

The polyol composition (Y) comprises a polyol compound (C) having a plurality of hydroxyl groups. With respect to the polyol compound (C), there is no particular limitation, and any polyol compound that is generally used in a urethane reactive two-pack curing-type adhesive can be used.

Specific examples of the polyol compounds (C) include a polyether polyol, a polyester polyol, a polyester polyether polyol, a polyurethane polyol, a polyester polyurethane polyol, a polyether polyurethane polyol, a vegetable oil polyol, a sugar alcohol, a polycarbonate polyol, an acrylic polyol, a hydroxyl group-containing olefin resin, and a hydroxyl group-containing fluororesin.

Examples of polyether polyols include glycols, such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol; and one which is obtained by subjecting an alkylene oxide, such as ethylene oxide, propylene oxide, butylene oxide, styrene oxide, epichlorohydrin, tetrahydrofuran, or cyclohexylene, to addition polymerization in the presence of a polymerization initiator, e.g., a trifunctional or tetrafunctional aliphatic alcohol, such as a triol of glycerol, trimethylolpropane, pentaerythritol, or polypropylene glycol. Polypropylene polyol is preferably used.

The polyester polyol is a reaction product of a polyhydric alcohol and a polycarboxylic acid. The polyhydric alcohol used in the synthesis of the polyester polyol may be a diol or a trifunctional or polyfunctional polyol. Further, the polyhydric alcohol may be a polyester polyether polyol using the above-mentioned polyether polyol as a diol, or may be a polyester polyurethane polyol using the below-mentioned polyurethane polyol.

Examples of diols include aliphatic diols, such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl-1,5-pentanediol, neopentyl glycol, 1,6-hexanediol, 1,4-bis(hydroxymethyl)cyclohexane, and 2,2,4-trimethyl-1,3-pentanediol;
ether glycols, such as polyoxyethylene glycol and polyoxypropylene glycol;
modified polyether diols obtained by ring-opening polymerization of an aliphatic diol and a cyclic ether linkage-containing compound, such as ethylene oxide, propylene oxide, tetrahydrofuran, ethyl glycidyl ether, propyl glycidyl ether, butyl glycidyl ether, phenyl glycidyl ether, or allyl glycidyl ether;
lactone polyester polyols obtained by a polycondensation reaction of an aliphatic diol and a lactone, such as lactanoide or ε-caprolactone;
bisphenols, such as bisphenol A and bisphenol F; and
alkylene oxide addition products of bisphenol obtained by adding ethylene oxide, propylene oxide, or the like to a bisphenol, such as bisphenol A or bisphenol F.

Examples of trifunctional or polyfunctional polyols include aliphatic polyols, such as trimethylolethane, trimethylolpropane, glycerol, hexanetriol, and pentaerythritol;
modified polyether polyols obtained by ring-opening polymerization of an aliphatic polyol and a cyclic ether linkage-containing compound, such as ethylene oxide, propylene oxide, tetrahydrofuran, ethyl glycidyl ether, propyl glycidyl ether, butyl glycidyl ether, phenyl glycidyl ether, or allyl glycidyl ether; and
lactone polyester polyols obtained by a polycondensation reaction of an aliphatic polyol and a lactone, such as ε-caprolactone.

Examples of polycarboxylic acids used in the synthesis of the polyester polyol include polybasic acids, e.g., aliphatic dicarboxylic acids, such as succinic acid, adipic acid, azelaic acid, sebacic acid, dodecanedicarboxylic acid, maleic anhydride, fumaric acid, 1,3-cyclopentanedicarboxylic acid, and 1,4-cyclohexanedicarboxylic acid; aromatic dicarboxylic acids, such as orthophthalic acid, isophthalic acid, terephthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; an anhydride or an ester-forming derivative of the above aliphatic dicarboxylic acid; p-hydroxybenzoic acid, p-(2-hydroxyethoxy)benzoic acid, and an ester-forming derivative of the dihydroxycarboxylic acid; and a dimer acid.

Examples of vegetable oil polyols include castor oil, dehydrated castor oil, castor hardened oil which is a hydrogenation product of castor oil, and a 5- to 50-mol alkylene oxide addition product of castor oil.

The polyurethane polyol is a reaction product of a low-molecular weight or high-molecular weight polyol and a polyisocyanate compound. With respect to the low-molecular weight polyol, a polyhydric alcohol similar to those mentioned above as examples of the raw materials for the polyester polyol can be used. Examples of high-molecular weight polyols include a polyether polyol and a polyester polyol. With respect to the polyisocyanate compound, there can be used the aromatic diisocyanate, aromatic aliphatic diisocyanate, aliphatic diisocyanate, and alicyclic diisocyanate which are mentioned above as examples of the isocyanate compound used in the synthesis of the polyurethane polyols (1) to (4) (examples of the polyol (p)), and those mentioned above as examples of the polyisocyanate compound (B).

Examples of sugar alcohols include pentaerythritol, sucrose, xylitol, sorbitol, isomaltose, lactitol, maltitol, and mannitol sugar.

### (Amine compound (D))

The polyol composition (Y) may contain an amine compound (D) having an amino group. In the present description, the amino group means an NH₂ group or an NHR group (wherein R is an alkyl group or aryl group optionally having a functional group).

With respect to the amine compound (D), there is no particular limitation, and a conventionally known amine compound can be used, and examples of such amine compounds include methylenediamine, ethylenediamine, isophoronediamine, 3,9-dipropanamine-2,4,8,10-tetraoxaspiroundecane, lysine, 2,2,4-trimethylhexamethylenediamine, hydrazine, piperazine, 2-hydroxyethylethylenediamine, di-2-hydroxyethylethylenediamine, di-2-hydroxyethylpropylenediamine, 2-hydroxypropylethylenediamine, di-2-hydroxypropylethylenediamine, poly(propylene glycol)diamine, poly(propylene glycol)triamine, poly(propylene glycol)tetramine, 1,2-diaminopropane, 1,3-diaminopropane,
1,4-diaminobutane, 1,5-diaminopentane, 1,6-diaminohexane, 1,7-diaminoheptane, 1,8-diaminooctane, 1,9-diaminononane, 1,10-diaminodecane, diethylenetriamine, dipropylenetriamine, triethylenetetramine, tripropylenetetramine, tetraethylenepentamine, tetrapropylenepentamine, pentaethylenehexamine, nonaethylenedecamine, trimethylhexamethylenediamine, tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bishexamethylenetriamine, 1,4-cyclohexanediamine, 4,4'-methylenebiscyclohexylamine, 4,4'-isopropylidenebiscyclohexylamine, norbornadiamine,
an amine compound (D1) having a plurality of amino groups, such as bis(aminomethyl)cyclohexane, diaminodicyclohexylmethane, isophoronediamine, menthenediamine, bis(cyanoethyl)diethylenetriamine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecanediamine, and a polyureaamine which is a reaction product of the above-mentioned polyamine and the above-mentioned isocyanate component,
a primary or secondary alkanolamine (D2), such as monoethanolamine, monoisopropanolamine, monobutanolamine, N-methylethanolamine, N-ethylethanolamine, N-methylpropanolamine, diethanolamine, and diisopropanolamine, and
a primary or secondary amine (D3), such as ethylamine, octylamine, laurylamine, myristylamine, stearylamine, oleylamine, diethylamine, dibutylamine, and distearylamine.

The amine compound (D) is preferably incorporated in such an amount that the polyol composition (Y) has an amine value of 20 to 70 mg KOH/g, more preferably 25 to 50 mg KOH/g.

In the present description, the amine value means a figure of the milligram of KOH in an equivalent with respect to the amount of HCl required for neutralizing 1 g of a sample, and there is no particular limitation with respect to the amine value, and the amine value can be determined using a known method. When the chemical structure and further, if necessary, the average molecular weight of the amine compound (D) and the like are known, an amine value of the amine compound can be calculated from: (the number of amino group(s) per molecule/average molecular weight) x 56.1 x 1,000. When the chemical structure or average molecular weight of the amine compound or the like is unknown, an amine value of the amine compound can be measured by a conventionally known method for measuring an amine value, for example, in accordance with JIS K7237-1995.

### (Mono-ol compound (E))

The polyol composition (Y) may contain a mono-ol compound (E) having one alcoholic hydroxyl group. With respect to the principal chain of the mono-ol compound (E), there is no particular limitation, and examples include a vinyl resin, an acrylic resin, a polyester, an epoxy resin, and a urethane resin, each having one hydroxyl group. Further, an aliphatic alcohol, an alkylalkylene glycol, or the like can be used. The principal chain of the mono-ol compound (E) may be either linear or branched. With respect to the position of the hydroxyl group bonded to the compound, there is no particular limitation, but it is preferred that the hydroxyl group is present at an end of a molecular chain of the compound.

Specific examples of the mono-ol compounds (E) include aliphatic mono-ols, such as methanol, ethanol, propanol, butanol, pentanol, hexanol, heptanol, octanol, nonanol, decanol lauryl alcohol, myristyl alcohol, pentadecanol, cetyl alcohol, heptadecanol, stearyl alcohol, nonadecanol, other alkanols (C20-C50), oleyl alcohol, and isomers thereof,
alicyclic mono-ols, such as cyclohexanol, methylcyclohexanol, 4-butylcyclohexanol, 4-pentylcyclohexanol, 4-hexylcyclohexanol, cyclodecanol, cyclododecanol, cyclopentadecanol, 4-isopropylcyclohexanol, 3,5,5-trimethylcyclohexanol, menthol, 2-norbornanol, borneol, 2-adamantanol, dicyclohexylmethanol, decatol, 2-cyclohexylcyclohexanol, 4-cyclohexylcyclohexanol, 4-(4-propylcyclohexyl)cyclohexanol, 4-(4-pentylcyclohexyl)cyclohexanol, α-ambrinol, desoxicorticosterone, 11-dehydrocorticosterone, cholesterol, β-sitosterol, campesterol, stigmasterol, brassicasterol, lanosterol, ergosterol, β-cholestanol, testosterone, estrone, digitoxigenin, dehydroepiandrosterone, coprostanol, pregnenolone, epicholestanol, 7-dehydrocholesterol, benzoic acid estradiol, tigogenin, hecogenin, methandienone, cortisone acetate, stenolone, and isomers thereof,
aromatic aliphatic mono-ols, such as benzyl alcohol, and
a polyoxyalkylene mono-ol obtained by subjecting an alkylene oxide, such as ethylene oxide, propylene oxide, butylene oxide, or tetrahydrofuran, to ring-opening addition polymerization using an alkyl compound containing one active hydrogen or the like as an initiator.

When the two-pack curing-type adhesive of the invention is used in the form of an adhesive of a solvent-less type, the viscosity of the polyol composition (Y) is controlled to be in the range suitable for a non-solvent lamination method. As an example, the viscosity of the polyol composition (Y) at 40°C is controlled to be in the range of 100 to 50,000 mPas, more preferably 100 to 20,000 mPas. The viscosity of the polyol composition (Y) can be controlled by the skeleton of the polyol compound (C) or the below-mentioned plasticizer or the like. When the viscosity of the polyol composition (Y) is controlled by the skeleton of the polyol compound (C), for example, the viscosity can be reduced by using polypropylene polyol, or a polyester polyol obtained by a reaction of an aliphatic carboxylic acid and a polyol. Alternatively, the viscosity can be increased by using a polyester polyol obtained by a reaction of an aromatic carboxylic acid and a polyol.

### (Additional component of the adhesive)

The two-pack curing-type adhesive of the invention may contain a component other than the above-mentioned components. An additional component may be contained in any one of or both of the polyisocyanate composition (X) and the polyol composition (Y), or may be used in such a way that the additional component is separately prepared and mixed with the polyisocyanate composition (X) and polyol composition (Y) immediately before the application of the adhesive. The components are individually described below.

### (Catalyst)

Examples of catalysts include metal catalysts, amine catalysts, aliphatic cyclic amide compounds, and quaternary ammonium salts.

Examples of metal catalysts include metal complex catalysts, inorganic metal catalysts, and organometal catalysts. Examples of metal complex catalysts include acetylacetonate salts of a metal selected from the group consisting of Fe (iron), Mn (manganese), Cu (copper), Zr (zirconium), Th (thorium), Ti (titanium), Al (aluminum), and Co (cobalt), such as iron acetylacetonate, manganese acetylacetonate, copper acetylacetonate, and zirconia acetylacetonate.

Examples of inorganic metal catalysts include catalysts selected from Sn, Fe, Mn, Cu, Zr, Th, Ti, Al, Co, and the like.

Examples of organometal catalysts include organozinc compounds, such as zinc octylate, zinc neodecanoate, and zinc naphthenate; organotin compounds, such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organonickel compounds, such as nickel octylate and nickel naphthenate; organocobalt compounds, such as cobalt octylate and cobalt naphthenate; organobismuth compounds, such as bismuth octylate, bismuth neodecanoate, and bismuth naphthenate; and titanium compounds, such as tetraisopropyl oxytitanate, dibutyltitanium dichloride, tetrabutyl titanate, butoxytitanium trichloride, and a titanium chelate complex having, as a ligand, at least one member of an aliphatic diketone, an aromatic diketone, and an alcohol having 2 to 10 carbon atoms.

Examples of amine catalysts include triethylenediamine, 2-methyltriethylenediamine, quinuclidine, 2-methylquinuclidine, N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylhexamethylenediamine, bis(2-dimethylaminoethyl) ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicylo[5.4.0]undecene-7, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of aliphatic cyclic amide compounds include σ-valerolactam, ε-caprolactam, ω-enanthollactam, η-capryllactam, and β-propiolactam. Of these, ε-caprolactam is more effective in curing promotion.

As examples of quaternary ammonium salts, there can be mentioned hydroxy salts, alkyl acid salts, and halide salts of an alkylammonium, an aromatic ammonium, or the like. Examples include tetramethylammonium hydroxide, tetraethylammonium hydroxide, tetrapropylammonium hydroxide, tetrabutylammonium hydroxide, benzyltrimethylammonium hydroxide, tetrabutylammonium fluoride, tetrabutylammonium chloride, tetrabutylammonium bromide, tetrabutylammonium iodide, benzyltriethylammonium chloride, and hexadecyltrimethylammonium bromide, but the quaternary ammonium salt is not limited to these examples.

### (Acid anhydride)

Examples of acid anhydrides include a cyclic aliphatic acid anhydride, an aromatic acid anhydride, and an unsaturated carboxylic acid anhydride, and such acid anhydrides can be used individually or in combination. More specific examples include maleic anhydride, phthalic anhydride, trimellitic anhydride, pyromellitic anhydride, benzophenonetetracarboxylic anhydride, dodecenylsuccinic anhydride, polyadipic anhydride, polyazelaic anhydride, polysebacic anhydride, poly(ethyloctadecanedioic) anhydride, poly(phenylhexadecanedioic) anhydride, tetrahydrophthalic anhydride, methyltetrahydrophthalic anhydride, methylhexahydrophthalic anhydride, hexahydrophthalic anhydride, methylhimic anhydride, trialkyltetrahydrophthalic anhydride, methylcyclohexenedicarboxylic anhydride, methylcyclohexenetetracarboxylic anhydride, ethylene glycol bistrimellitate dianhydride, HET anhydride, nadic anhydride, methylnadic anhydride, 5-(2,5-dioxotetrahydro-3-furanyl)-3-methyl-3-cyclohexane-1,2-dicarboxylic anhydride, 3,4-dicarboxy-1,2,3,4-tetrahydro-1-naphthalenesuccinic dianhydride, and 1-methyl-dicarboxy-1,2,3,4-tetrahydro-1-naphthalenesuccinic dianhydride.

Further, the compound mentioned above as an example of the acid anhydride, which is modified with glycol, may be used. Examples of glycols usable in the modification include alkylene glycols, such as ethylene glycol, propylene glycol, and neopentyl glycol; and polyether glycols, such as polyethylene glycol, polypropylene glycol, and polytetramethylene ether glycol. Further, a copolymerized polyether glycol of the above two or more glycols and/or polyether glycols can be used.

Alternatively, among the compounds mentioned above as an example of the acid anhydride (B), a homopolymer or a copolymer of a compound having a polymerizable unsaturated group, such as maleic anhydride, may be used. Examples of compounds copolymerizable with a compound having an acid anhydride group and a polymerizable unsaturated group include α-olefins, such as ethylene, propylene, 1,3-butadiene, and cyclopentylethylene; vinyl compounds having an aromatic ring, such as styrene, 1-ethynyl-4-methylbenzene, divinylbenzene, 1-ethynyl-4-methylethylbenzene, benzonitrile, acrylonitrile, p-tert-butylstyrene, 4-vinylbiphenyl, 4-ethynylbenzyl alcohol, 2-ethynylnaphthalene, and phenanthren-9-ethynyl; and fluoroolefins, such as vinylidene fluoride, tetrafluoroethylene, hexafluoropropylene, and chlorotrifluoroethylene, and these compounds can be used individually or in combination. Styrene or p-tert-butylstyrene, which is a vinyl compound having an aromatic ring, is preferably used.

### (Coupling agent)

Examples of coupling agents include silane coupling agents, titanate coupling agents, and aluminum coupling agents.

Examples of silane coupling agents include aminosilanes, such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, N-phenyl-γ-aminopropyltrimethoxysilane, bis[3-(trimethoxysilyl)propyl]amine, and bis[3-(triethoxysilyl)propyl]amine; epoxysilanes, such as β-(3,4-epoxycyclohexyl)ethyltrimethoxysilane, γ-glycidoxypropyltrimethoxysilane, and γ-glycidoxypropyltriethoxysilane; vinylsilanes, such as vinyltris(β-methoxyethoxy)silane, vinyltriethoxysilane, vinyltrimethoxysilane, and γ-methacryloxypropyltrimethoxysilane; and hexamethyldisilazane, and γ-mercaptopropyltrimethoxysilane.

Examples of titanate coupling agents include tetraisopropoxytitanium, tetra-n-butoxytitanium, butyl titanate dimer, tetrastearyl titanate, titanium acetylacetonate, titanium lactate, tetraoctylene glycol titanate, titanium lactate, and tetrastearoxytitanium.

Examples of aluminum coupling agents include acetoalkoxyaluminum diisopropylate.

### (Pigment)

With respect to the pigment, there is no particular limitation, and there can be mentioned organic pigments and inorganic pigments described in Handbook of Paint and Coating Raw Materials (Toryo Genryo Binran), the 1970 year's edition (edited by Japan Paint Manufacturers Association), such as a loading pigment, a white pigment, a black pigment, a gray pigment, a red pigment, a brown pigment, a green pigment, a blue pigment, a metal powder pigment, a luminescent pigment, and a pearlescent pigment, and further plastic pigments.

Examples of loading pigments include precipitated barium sulfate, chalk, precipitated calcium carbonate, calcium bicarbonate, white marble, alumina white, silica, water-containing finely powdered silica (white carbon), ultra-finely powdered anhydrous silica (aerogel), silica sand, talc, precipitated magnesium carbonate, bentonite, clay, kaolin, and loess.

Specific examples of organic pigments include insoluble azo pigments, such as Benzidine yellow, Hansa yellow, and lake red 4R; soluble azo pigments, such as lake red C, Carmine 6B, and bordeaux 10; (copper) phthalocyanine pigments, such as phthalocyanine blue and phthalocyanine green; basic dyeing lakes, such as rhodamine lake and methyl violet lake; mordant dye pigments, such as quinoline lake and fast sky blue; vat dye pigments, such as an anthraquinone pigment, a thioindigo pigment, and a perinone pigment; quinacridone pigments, such as Cinquacia red B; dioxazine pigments, such as dioxazine violet; condensed azo pigments, such as chromophthal; and aniline black.

Examples of inorganic pigments include chromates, such as chrome yellow, zinc chromate, and molybdate orange; ferrocyanide compounds, such as Prussian blue; metal oxides, such as titanium oxide, zinc oxide, Mapico yellow, iron oxide, red iron oxide, chrome oxide green, and zirconium oxide; sulfides or selenides, such as cadmium yellow, cadmium red, and mercury sulfide; sulfates, such as barium sulfate and lead sulfate; silicates, such as calcium silicate and ultramarine blue; carbonates, such as calcium carbonate and magnesium carbonate; phosphates, such as cobalt violet and manganese violet; metal powder pigments, such as an aluminum powder, a gold powder, a silver powder, a copper powder, a bronze powder, and a brass powder; a flake pigment of the above metal, and a mica flake pigment; metallic pigments and pearl pigments, such as a mica flake pigment coated with a metal oxide, and a mica iron oxide pigment; and graphite, and carbon black.

Examples of plastic pigments include "GRANDOLL PP-1000", "PP-2000S", manufactured by DIC Corporation.

The pigment used may be appropriately selected according to the purpose, but, for example, in view of excellent durability, weathering resistance, and design properties, an inorganic oxide, such as titanium oxide or zinc oxide, is preferably used as a white pigment, and carbon black is preferably used as a black pigment.

The amount of the pigment incorporated is, as an example, 1 to 400 parts by mass, relative to 100 parts by mass of the total of the polyol composition (X) and the polyisocyanate composition (Y), in terms of the amount of the nonvolatile matter, more preferably 10 to 300 parts by mass in view of achieving more excellent bonding properties and blocking resistance.

### (Plasticizer)

Examples of plasticizers include a phthalic acid plasticizer, a fatty acid plasticizer, an aromatic polycarboxylic acid plasticizer, a phosphoric acid plasticizer, a polyol plasticizer, an epoxy plasticizer, a polyester plasticizer, and a carbonate plasticizer.

Examples of phthalic acid plasticizers include phthalate plasticizers, such as dimethyl phthalate, diethyl phthalate, dibutyl phthalate, diisobutyl phthalate, dihexyl phthalate, diheptyl phthalate, di-(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butylbenzyl phthalate, dicyclohexyl phthalate, octyldecyl phthalate, dimethyl isophthalate, di-(2-ethylhexyl) isophthalate, and diisooctyl isophthalate; and tetrahydrophthalate plasticizers, such as di-(2-ethylhexyl) tetrahydrophthalate, di-n-octyl tetrahydrophthalate, and diisodecyl tetrahydrophthalate.

Examples of fatty acid plasticizers include adipic acid plasticizers, such as di-n-butyl adipate, di-(2-ethylhexyl) adipate, diisodecyl adipate, diisononyl adipate, di(C6-C10 alkyl) adipate, and dibutyl diglycol adipate; azelaic acid plasticizers, such as di-n-hexyl azelate, di-(2-ethylhexyl) azelate, and diisooctyl azelate; sebacic acid plasticizers, such as din-butyl sebacate, di-(2-ethylhexyl) sebacate, and diisononyl sebacate; maleic acid plasticizers, such as dimethyl maleate, diethyl maleate, di-n-butyl maleate, and di-(2-ethylhexyl) maleate; fumaric acid plasticizers, such as di-n-butyl fumarate and di-(2-ethylhexyl) fumarate; itaconic acid plasticizers, such as monomethyl itaconate, monobutyl itaconate, dimethyl itaconate, diethyl itaconate, dibutyl itaconate, and di-(2-ethylhexyl) itaconate; stearic acid plasticizers, such as n-butyl stearate, glycerol monostearate, and diethylene glycol distearate; oleic acid plasticizers, such as butyl oleate, glyceryl monooleate, and diethylene glycol monooleate; citric acid plasticizers, such as triethyl citrate, tri-n-butyl citrate, acetyltriethyl citrate, acetyltributyl citrate, and acetyltri-(2-ethylhexyl) citrate; ricinolic acid plasticizers, such as methylacetyl ricinoleate, butylacetyl ricinoleate, glyceryl monoricinoleate, and diethylene glycol monoricinoleate; and other fatty acid plasticizers, such as diethylene glycol monolaurate, diethylene glycol dipelargonate, and pentaerythritol fatty acid ester.

Examples of aromatic polycarboxylic acid plasticizers include trimellitic acid plasticizers, such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate; and pyromellitic acid plasticizers, such as tetra-(2-ethylhexyl) pyromellitate and tetra-n-octyl pyromellitate.

Examples of phosphoric acid plasticizers include triethyl phosphate, tributyl phosphate, tri-(2-ethylhexyl) phosphate, tributoxyethyl phosphate, triphenyl phosphate, octyldiphenyl phosphate, cresyldiphenyl phosphate, cresylphenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of polyol plasticizers include glycol plasticizers, such as diethylene glycol dibenzoate, dipropylene glycol dibenzoate, triethylene glycol dibenzoate, triethylene glycol di-(2-ethylbutyrate), triethylene glycol di-(2-ethylhexanoate), and dibutylmethylene bisthioglycolate; and glycerol plasticizers, such as glycerol monoacetate, glycerol triacetate, and glycerol tributyrate.

Examples of epoxy plasticizers include epoxidized soybean oil, epoxybutyl stearate, di-2-ethylhexyl epoxyhexahydrophthalate, diisodecyl epoxyhexahydrophthalate, epoxytriglyceride, octyl epoxidized oleate, and decyl epoxidized oleate.

Examples of polyester plasticizers include an adipic acid polyester, a sebacic acid polyester, and a phthalic acid polyester.

Examples of carbonate plasticizers include propylene carbonate and ethylene carbonate.

Further examples of plasticizers include partially hydrogenated terphenyl, adhesive plasticizers, and polymerizable plasticizers, such as diallyl phthalate and an acrylic monomer or oligomer. These plasticizers can be used individually or in combination.

### (Phosphoric acid compound)

Examples of phosphoric acid compounds include phosphoric acid, pyrophosphoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphoric acid.

### (Form of the adhesive)

The two-pack curing-type adhesive of the invention may be in the form of any of a solvent type and a solvent-less type. In the present description, the adhesive of a "solvent type" indicates the form of the adhesive used in a method in which the adhesive is applied to a substrate and then heated using an oven or the like to volatize the organic solvent in the film, followed by lamination with another substrate, i.e., a so-called dry lamination method. Any one of or both of the polyisocyanate composition (X) and the polyol composition (Y) contain an organic solvent capable of dissolving (diluting) the constituent of the polyisocyanate composition (X) and/or the polyol composition (Y) used in the invention.

Examples of organic solvents include esters, such as ethyl acetate, butyl acetate, and Cellosolve acetate; ketones, such as acetone, methyl ethyl ketone, isobutyl ketone, and cyclohexanone; ethers, such as tetrahydrofuran and dioxane; aromatic hydrocarbons, such as toluene and xylene; halogenated hydrocarbons, such as methylene chloride and ethylene chloride; and dimethyl sulfoxide, and dimethylsulfonamide. The organic solvent, which is used as a reaction medium when producing the constituent of the polyisocyanate composition (X) or the polyol composition (Y), may be further used as a diluent in the application.

In the present description, the adhesive of a "solvent-less type" indicates the form of the adhesive in which the polyisocyanate composition (X) and polyol composition (Y) substantially do not contain an ester, such as ethyl acetate, butyl acetate, or Cellosolve acetate, a ketone, such as acetone, methyl ethyl ketone, isobutyl ketone, or cyclohexanone, an ether, such as tetrahydrofuran or dioxane, an aromatic hydrocarbon, such as toluene or xylene, a halogenated hydrocarbon, such as methylene chloride or ethylene chloride, or an organic solvent having high dissolving power, such as dimethyl sulfoxide or dimethylsulfonamide, particularly do not contain ethyl acetate or methyl ethyl ketone, and which is used in a method in which the adhesive is applied to a substrate and then laminated with another substrate without the step of heating the adhesive using an oven or the like to volatilize the solvent, i.e., a so-called non-solvent lamination method. When the organic solvent, which is used as a reaction medium in producing the constituent of the polyisocyanate composition (X) or the polyol composition (Y) or the raw materials for the composition, cannot be removed so that a slight amount of the organic solvent remains in the polyisocyanate composition (X) or polyol composition (Y), it is understood that the adhesive substantially do not contain an organic solvent. Further, when the polyol composition (Y) contains a low-molecular weight alcohol, the low-molecular weight alcohol is reacted with the polyisocyanate composition (X) to constitute part of a film of the adhesive, and therefore volatilization of such a low-molecular weight alcohol is not needed after the application of the adhesive. Therefore, the above-mentioned form of the adhesive is regarded as a solvent-less type adhesive, and the low-molecular weight alcohol is not regarded as an organic solvent.

It is preferred that the two-pack curing-type adhesive of the invention is used in such an amount that the ratio of the molar number of the isocyanate group [NCO] contained in the polyisocyanate composition (X) to the molar number of the hydroxyl group [OH] contained in the polyol composition (Y) [NCO]/[OH] becomes 0.5 to 5.0, more preferably 1.0 to 3.0. By virtue of this, appropriate curing properties can be obtained, irrespective of the humidity of the environment for the application of the adhesive.

### <Laminated material>

The laminated material of the invention is obtained by, for example, a method having the step of first mixing the polyisocyanate composition (X) and the polyol composition (Y) and then applying the resultant mixture to a first substrate, and subsequently laminating a second substrate on the applied surface and curing the adhesive layer to obtain a laminated material (two-part mixing step), or a method having the step of separately applying the polyisocyanate composition (X) and the polyol composition (Y) to a first substrate and a second substrate, respectively, and then contacting the applied surfaces of the individual substrates with each other and pressing them to laminate the first substrate and the second substrate, and curing the adhesive layer to obtain a laminated material (two-part separately applying step). With respect to the film used, there is no particular limitation, and a film can be appropriately selected according to the use.

For example, as a film for food packaging, there can be mentioned a polyethylene terephthalate (PET) film, a polystyrene film, a polyamide film, a polyacrylonitrile film, polyolefin films, such as a polyethylene film (LLDPE: low density polyethylene film; HDPE: high density polyethylene film; MDOPE: monoaxially oriented polyethylene film; OPE: biaxially oriented polyethylene film), a polypropylene film (CPP: cast polypropylene film; OPP: biaxially oriented polypropylene film), and a gas-barrier heat-sealing film having an olefin heat-sealing resin layer formed on one surface or both surfaces of a resin having gas barrier properties, such as an ethylene-vinyl alcohol copolymer or polyvinyl alcohol, a polyvinyl alcohol film, and an ethylene-vinyl alcohol copolymer film.

Further, a biomass film, a biodegradable film, or a reproduced plastic film formed from a material containing a biomass-derived component, a biodegradable component, or a reproduced component is preferably used.

The biomass film, biodegradable film, and reproduced plastic film are commercially available from various manufacturers, and further there can be used films certified in various countries, for example, film sheets shown in the list of biomass certified products descirbed by Japan Organics Rercycling Association, films shown in the list of Eco Mark certified products descirbed by Japan Enviornment Association, and films having a logo certified by Japan BioPlastics Association.

### (Biomass film)

Specific examples of well known biomass films include those using biomass-derived ethylene glycol as a raw material. The biomass-derived ethylene glycol uses, as a raw material, ethanol (biomass ethanol) produced from biomass as a raw material. For example, biomass-derived ethylene glycol can be obtained by a method in which ethylene glycol is formed from biomass ethanol through ethylene oxide by a conventionally known method. Alternatively, commercially available biomass ethylene glycol may be used and, for example, biomass ethylene glycol commercially available from India Glycols Ltd. can be advantageously used.

For example, as a substitute for the polyethylene terephthalate film using a conventional petroleum raw material, there have been known films containing biomass polyester, biomass polyethylene terephthalate, or the like, which has biomass-derived ethylene glycol as a diol unit and fossil fuel-derived dicarboxylic acid as a dicarboxylic acid unit.

With respect to the dicarboxylic acid unit of the biomass polyester, a fossil fuel-derived dicarboxylic acid is used. With respect to the dicarboxylic acid, any of an aromatic dicarboxylic acid, an aliphatic dicarboxylic acid, and a derivative thereof can be used.

Further, the film may be a copolymerized polyester having the above-mentioned diol component and dicarboxylic acid component and further, as a third component, a difunctional oxycarboxylic acid or a copolymerizable component for forimg a crosslinked structure, such as at least one polyfunctional compound selected from the group consisting of a trifunctional or polyfunctional polyhydric alcohol, a trifunctional or polyfunctional polycarboxylic acid and/or an anhydride thereof and a trifunctional or polyfunctional oxycarboxylic acid.

Further, for example, as a substitute for the polyolefin film using a conventional petroleum raw material, there have been known biomass polyolefin films, such as a biomass polyethylene film containing a polyethylene resin using biomass-derived ethylene glycol as a raw material, and a biomass polyethylene-polypropylene film.

With respect to the polyethylene resin, there is no particular limitation as long as the above-mentioned biomass-derived ethylene glycol is used as part of the raw material for the resin, and examples include an ethylene homopolymer and a copolymer of ethylene and an α-olefin, which is comprised mainly of ethylene (ethylene-α-olefin copolymer containing an ethylene unit in an amount of 90% by mass or more), and these can be used individually or in combination.

With respect to the α-olefin constituting the copolymer of ethylene and an α-olefin, there is no particular limitation, and examples include α-olefins having 4 to 8 carbon atoms, such as 1-butene, 4-methyl-1-pentene, 1-hexene, and 1-octene. Known polyethylene resins, such as a low-density polyethylene resin, a medium-density polyethylene resin, and a linear low-density polyethylene resin, can be used. Of these, from the viewpoint of further preventing a damage of the film, such as perforation or breakage, even when the film and another one rub together, preferred is a linear low-density polyethylene resin (LLDPE) (a copolymer of ethylene and 1-hexene, or a copolymer of ethylene and 1-octene), and more preferred is a linear low-density polyethylene resin having a density of 0.910 to 0.925 g/cm³.

With respect to the biomass film, those which use biomass raw materials distinguished in terms of a biomass plastic ratio defined by ISO 16620 or ASTM D6866 are on the market. In air, radioactive carbon 14C is present in a ratio of one radioactive carbon to 1,012 carbons, and this ratio is the same in the carbon dioxide contained in air, and thus is the same in plants that have carbon dioxide fixed by photosynthesis. For this reason, carbon constituting a plant-derived resin contains radioactive carbon 14C. In contrast, carbon constituting a fossil fuel-derived resin contains almost no radioactive carbon 14C. By measuring a concentration of radioactive carbon 14C in a resin by means of an accelerator mass spectrometer, a content of a plant-derived resin in the resin, i.e., a biomass plastic ratio can be determined.

As examples of plant-derived low-density polyethylene which is a biomass plastic having a biomass plastic ratio of 80% or more, preferably 90% or more, as defined by ISO 16620 or ASTM D6866, there can be mentioned trade names "SBC818", "SPB608", "SBF0323HC", "STN7006", "SEB853", "SPB681", manufactured by Braskem S.A., and the like, and a film using the above material as a raw material can be advantageously used.

Further, films and sheets having incorporated starch or polylactic acid which is a biomass raw material have been knwon. These can be appropriately selected according to the use.

The biomass film may be a laminated material having a plurality of biomass films laminated, or may be a laminated material having a conventional petroleum film and a biomass film. Further, the biomass film may be either a cast film or an oriented film, and the method for producing the film is not limited.

### (Biodegradable film)

Specific examples of well known biodegradable films include those using biodegradable resins which are generally available as a raw material. Examples of such biodegradable resins include polycaprolactone, polyvinyl alcohol, polyamide, a cellulose ester, a lactic acid polyester resin, an aliphatic polyester resin, and an aliphatic aromatic polyester resin. These biodegradable resins may be used individually or in combination. Of these, an aliphatic polyester resin or an aliphatic aromatic polyester resin is preferably used.

Examples of aliphatic polyester resins include an aliphatic polyester obtained by a polycondensation reaction of an aliphatic diol and an aliphatic dicarboxylic acid. Examples of aliphatic diols include ethylene glycol, 1,3-propanediol, 1,4-butanediol, 1,5-pentanediol, 1,6-hexanediol, 1,4-cyclohexanediol, and 1,4-cyclohexanedimethanol. These diols may be used individually or in combination. Of these, 1,4-butanediol is preferably used. Examples of aliphatic dicarboxylic acids include oxalic acid, succinic acid, glutaric acid, adipic acid, sebacic acid, suberic acid, and dodecanedioic acid, and an acid anhydride thereof which is a derivative of the above acid may be used. Of these, succinic acid or succinic anhydride, or a mixture of succinic acid and/or succinic anhydride and adipic acid is preferred.

Specific examples include polybutylene succinate (PBS) obtained from 1,4-butanediol and succinic acid (for example, BioPBS, manufactured by PPT MCC Biochem Co., Ltd.), and polybutylene succinate adipate (PBSA) obtained by copolymerizing adipic acid with PBS.

Examples of aliphatic aromatic polyester resins include a copolymer comprising an aliphatic dicarboxylic acid unit, an aromatic dicarboxylic acid unit, and a linear aliphatic and/or alicyclic diol unit. The diol component constituting the diol unit generally has 2 to 10 carbon atoms, and examples of such diols include ethylene glycol, 1,3-propanediol, 1,4-butanediol, and 1,4-cyclohexanedimethanol. Of these, a diol having 2 to 4 carbon atoms is preferred, ethylene glycol or 1,4-butanediol is preferred, and 1,4-butanediol is further preferred. The dicarboxylic acid component constituting the dicarboxylic acid unit generally has 2 to 10 carbon atoms, and examples of such dicarboxylic acids include succinic acid, adipic acid, suberic acid, sebacic acid, and dodecanedioic acid. Of these, succinic acid or adipic acid is preferred. Examples of aromatic dicarboxylic acid components constituting the aromatic dicarboxylic acid unit include terephthalic acid, isophthalic acid, and naphthalenedicarboxylic acid. Of these, terephthalic acid or isophthalic acid is preferred, and terephthalic acid is further preferred.

Specific examples include PBAT (for example, ecoflex, manufactured by BASF Japan Ltd.) which is a copolymer of 1,4-butanediol, adipic acid, and terephthalic acid.

Further examples include an aliphatic polyester copolymer obtained from a hydroxyalkanoic and a polycarboxylic acid, such as poly(3-hydroxyalkanoate) (especially, poly(3-hydroxybutyrate-co-3-hydroxyhexanoate) (PHBH) (for example, AONILEX, manufactured by Kaneka Corporation), and polylactic acid (PLA) (for example, REVODE, manufactured by Zhejiang Hisun Biomaterials Co., Ltd.; and Ingeo, manufactured by Nature Works LLC).

The biodegradable film may be a laminated material having a plurality of biodegradable films laminated, or may be a laminated material having a conventional petroleum film and a biodegradable film. Further, the biodegradable film may be either a cast film or an oriented film, and the method for producing the film is not limited.

The film may have been subjected to orientation treatment. As an orientation treatment method, a general method is employed in which a resin is melt-extruded into a sheet form by an extrusion film formation method or the like, and then subjected to simultaneous biaxial orientation or successive biaxial orientation. Further, in the case of successive biaxial orientation, generally, a longitudinal orientation treatment is first conducted, and then transverse orientation is conducted. Specifically, a method using a combination of longitudinal orientation utilizing a difference of the speed between rolls and transverse orientation using a tenter is generally used.

For forming an adhesive layer free from a defect, such as film breakage or cissing, if necessary, the surface of the film may be subjected to surface treatment, such as flame treatment or corona discharge treatment.

Alternatively, a film having laminated thereon a deposited layer of a metal, such as aluminum, or a metal oxide, such as silica or alumina, and a barrier film containing a gas barrier layer, such as polyvinyl alcohol, an ethylene-vinyl alcohol copolymer, or vinylidene chloride, may be used in combination. By using such a film, a laminated material having barrier properties with respect to water vapor, oxygen, an alcohol, an inert gas, a volatile organic substance (aroma), or the like can be obtained.

With respect to the paper, there is no particular limitation, and a known paper substrate can be used. Specifically, a paper substrate is produced using a natural fiber for paper, such as wood pulp, by means of a known paper machine, but the paper making conditions are not particularly limited. Examples of natural fibers for paper include wood pulp, such as softwood pulp and hardwood pulp, nonwood pulp, such as manila pulp, sisal pulp, and flax pulp, and pulp obtained by chemically modifying the above pulp. With respect to the type of pulp, chemical pulp obtained by a sulfate cooking process, an acidic, neutral, or alkaline sulfite cooking process, a soda cooking process, or the like, ground pulp, chemiground pulp, thermomechanical pulp, or the like can be used. Further, commercially available various wood free paper, coat paper, backing paper, impregnated paper, paperboard paper, board, and the like can be used.

Examples of more specific constructions of the laminated material include:
(1) substrate 1/adhesive layer 1/sealant film,
(2) substrate 1/adhesive layer 1/vacuum metallized cast film,
(3) substrate 1/adhesive layer 1/vacuum metallized oriented film,
(4) transparent deposited oriented film/adhesive layer 1/sealant film,
(5) substrate 1/adhesive layer 1/substrate 2/adhesive layer 2/sealant film,
(6) substrate 1/adhesive layer 1/vacuum metallized oriented film/adhesive layer 2/sealant film,
(7) substrate 1/adhesive layer 1/transparent deposited oriented film/adhesive layer 2/sealant film,
(8) substrate 1/adhesive layer 1/metal layer/adhesive layer 2/sealant film,
(9) substrate 1/adhesive layer 1/substrate 2/adhesive layer 2/metal layer/adhesive layer 3/sealant film, and
(10) substrate 1/adhesive layer 1/metal layer/adhesive layer 2/substrate 2/adhesive layer 3/sealant film,
but the construction of the laminated material is not limited to these.

Examples of the substrates 1 used in the construction (1) include an MDOPE film, an OPE film, an OPP film, a PET film, a nylon film, and paper. Further, as the substrate 1, a substrate having a coating for the purpose of improving the gas barrier properties or the ink receptivity when forming the below-mentioned printing layer, or the like may be used. Examples of commercially available products of the substrate film 1 having a coating include a K-OPP film, a K-PET film, and a K-nylon film. The adhesive layer 1 is a cured film of the adhesive of the invention. Examples of sealant films include a CPP film, an LLDPE film, an easy-opening heat-sealing film, and a gas-barrier heat-sealing film. On the adhesive layer 1 side of the substrate 1 (in the case using the substrate film 1 having a coating, on the adhesive layer 1 side of the coating layer) or on the side of the substrate 1 opposite to the adhesive layer 1, a printing layer may be formed. The printing layer is formed using a printing ink, such as a gravure ink, a flexographic ink, an offset ink, a stencil ink, or an ink-jet ink, by a general printing method conventionally used in printing on a polymer film or paper.

Examples of the substrates 1 used in the constructions (2) and (3) include an MDOPE film, an OPE film, an OPP film, a PET film, and paper. The adhesive layer 1 is a cured film of the adhesive of the invention. As the vacuum metallized cast film, a VM-CPP film, a VM-LLDPE film or the like obtained by subjecting a CPP film, an LLDPE film, or a gas-barrier heat-sealing film to vacuum metallization of aluminum or the like can be used, and, as the vacuum metallized oriented film, a VM-MDOPE film, a VM-OPE film, or VM-OPP film obtained by subjecting an MDOPE film, an OPE film, or an OPP film to vacuum metallization of aluminum or the like can be used. Like the construction (1), a printing layer may be formed on any one side of the substrate 1.

Examples of the transparent deposited oriented films used in the construction (4) include films obtained by subjecting an MDOPE film, an OPE film, an OPP film, a PET film, a nylon film, or the like to silica or alumina deposition. A film having a coating on the inorganic deposited layer of silica or alumina for the purpose of protecting the deposited layer, or the like may be used. The adhesive layer 1 is a cured film of the adhesive of the invention. As examples of the sealant films, there can be mentioned the same sealant films as those in the construction (1). On the adhesive layer 1 side of the transparent deposited oriented film (in the case using the inorganic deposited layer having a coating thereon, on the adhesive layer 1 side of the coating layer), a printing layer may be formed. A method for forming the printing layer is the same as that used for the construction (1).

Examples of the substrates 1 used in the construction (5) include a PET film and paper. Examples of the substrates 2 include a nylon film. At least one of the adhesive layer 1 and the adhesive layer 2 is a cured film of the adhesive of the invention. As examples of the sealant films, there can be mentioned the same sealant films as those in the construction (1). Like the construction (1), a printing layer may be formed on any one side of the substrate 1.

As examples of the substrates 1 in the construction (6), there can be mentioned the same substrates 1 as those in the constructions (2) and (3). Examples of the vacuum metallized oriented films include a VM-MDOPE film, a VM-OPE film, a VM-OPP film, and a VM-PET film, which are obtained by subjecting an MDOPE film, an OPE film, an OPP film, or a PET film to vacuum metallization of aluminum or the like. At least one of the adhesive layer 1 and the adhesive layer 2 is a cured film of the adhesive of the invention. As examples of the sealant films, there can be mentioned the same sealant films as those in the construction (1). Like the construction (1), a printing layer may be formed on any one side of the substrate 1.

Examples of the substrates 1 in the construction (7) include a PET film and paper. As examples of the transparent deposited oriented films, there can be mentioned the same transparent deposited oriented films as those in the construction (4). At least one of the adhesive layers 1 and 2 is a cured film of the adhesive of the invention. As examples of the sealant films, there can be mentioned the same sealant films as those in the construction (1). Like the construction (1), a printing layer may be formed on any one side of the substrate 1.

Examples of the substrates 1 in the construction (8) include a PET film and paper. Examples of the metal layers include an aluminum foil. At least one of the adhesive layers 1 and 2 is a cured film of the adhesive of the invention. As examples of the sealant films, there can be mentioned the same sealant films as those in the construction (1). Like the construction (1), a printing layer may be formed on any one side of the substrate 1.

Examples of the substrates 1 in the constructions (9) and (10) include a PET film and paper. Examples of the substrates 2 include a nylon film. Examples of the metal layers include an aluminum foil. At least one of the adhesive layers 1, 2 and 3 is a cured film of the adhesive of the invention. As examples of the sealant films, there can be mentioned the same sealant films as those in the construction (1). Like the construction (1), a printing layer may be formed on any one side of the substrate 1.

When the laminated material of the invention has at least one of a vacuum metallized film, a transparent deposited film, and a metal layer, the adhesive layer in contact with the vacuum metallized layer, transparent deposited layer, or metal layer is preferably a cured film of the adhesive of the invention.

When the adhesive of the invention is used as a bonding auxiliary, the bonding auxiliary of the invention is applied to a film material as a substrate using a roll, such as a gravure roll, and heated by an oven or the like to volatilize the organic solvent, and then a molten polymer material is laminated on the resultant auxiliary by an extruder, obtaining the laminated material of the invention.

The laminated material of the invention may further have an additional film or substrate, in addition to the above-mentioned constructions (1) to (10). As an additional substrate, the above-mentioned oriented film, cast film, and transparent deposited film, and the below-mentioned porous substrate, such as paper, wood, or leather, can be used. The adhesive used in lamination of the additional substrate may be or may not be the adhesive of the invention.

The "additional layer" may contain a known additive or stabilizer, such as an antistatic agent, a bonding coat agent, a plasticizer, a lubricant, or an antioxidant. Further, the "additional layer" may have the surface of the film subjected to pretreatment for improving the adhesion with another material optionally laminated, such as corona treatment, plasma treatment, ozone treatment, chemical treatment, or solvent treatment.

The laminated material of the invention can be advantageously used in various applications, for example, packaging materials for foods, pharmaceuticals, and articles for daily use, a cover material, paper tableware, such as a paper straw, a paper napkin, a paper spoon, a paper plate, and a paper cup, outdoor industry applications, such as a wall material, a roofing material, a solar cell panel material, a battery packaging material, a window material, an outdoor flooring material, a lighting protective material, a member for automobile, a signboard, and a sticker, a decorative sheet for use in a simultaneous injection molding and decoration process and the like, and packaging materials for a liquid detergent for washing, a liquid detergent for kitchen, a liquid detergent for bathroom, a liquid soap for bathroom, a liquid shampoo, and a liquid conditioner.

### <Packaging material>

The laminated material of the invention can be used as a multilayer packaging material for the purpose of protecting foods, pharmaceuticals, and the like. When used as a multilayer packaging material, the layer construction of the laminated material can vary depending on the contents, the environment for use, or the form for use. Further, the packaging material of the invention may be appropriately provided with an easy-opening treatment or resealable means.

As an example of a specific embodiment of the packaging material of the invention, there can be mentioned a packaging material obtained by forming a laminated material having a sealant film, for example, the laminated material having the above-mentioned construction examples (1) and (4) to (10) of the laminated material, into a bag form. Such a packaging material is obtained by folding or stacking the laminated material on another one so that the sides of the inner layers (the sides of the sealant film) face each other, and heat-sealing the ends of the laminated material into a bag form. As a method for producing a bag, there can be mentioned a method in which the ends of the laminated material are heat-sealed into a form of, for example, a side sealed type, a two-side sealed type, a three-side sealed type, a four-side sealed type, an envelope sealed type, a gassho (back line) sealed type, a ribbed sealed type, a flat bottom sealed type, a square bottom sealed type, a gusseted type, or another heat-sealed type. The packaging material of the invention can be in various forms according to the contents, the environment for use, or the form for use. The packaging material of the invention can be in the form of a self-supporting packaging material (standing pouch) or the like. Examples of heat-sealing methods include known methods, such as bar sealing, rotating roll sealing, belt sealing, impulse sealing, radiofrequency sealing, and ultrasonic sealing.

The packaging material of the invention is filled with contents through the opening thereof, and then the opening is heat-sealed to produce a product using the packaging material of the invention. Examples of contents filling the packaging material include foods, for example, confectionery, such as rice confectionery, bean confectionery, nuts, biscuits or crackers, wafer confectionery, marshmallow, pie, semi-moist cake, candy, and snacks; staple foods, such as bread, snack noodle, instant noodle, dried noodle, pasta, aseptic packaged cooked rice, a porridge of rice and vegetables, rice gruel, packaged rice cake, and cereal foods; processed agricultural products, such as pickles, cooked beans, fermented soybeans, miso, dried bean curd, bean curd, nametake mushroom, konjak jerry (devil's tongue), processed edible wild plant products, jam, peanut cream, salad, frozen vegetables, and processed potato products; processed livestock products, such as ham, bacon, sausage, chicken processed products, and corned beef; processed marine products, such as fish ham and sausage, fish-paste products, boiled fish paste, laver, food boiled down in soy, dried bonito, salted fish guts, smoked salmon, and spicy seasoned cod roe; fruits, such as peach, mandarin orange, pineapple, apple, pear, and cherry; vegetables, such as corn, asparagus, mushroom, onion, carrot, daikon radish, and potato; cooked foods, e.g., frozen daily dishes and chilled daily dishes, such as hamburger, meatball, marine product fry, dumping stuffed with minced pork, and croquette; dairy products, such as butter, margarine, cheese, cream, instant full cream milk powder, and infant formula powdered milk; and foods, such as liquid seasoning, retort-pouch curry, and pet food.

Further, the packaging material of the invention can be used as various packaging materials for nonfood contents, for example, cigarettes, a disposable body warmer, pharmaceuticals, such as a transfusion pack, a liquid detergent for washing, a liquid detergent for kitchen, a liquid detergent for bathroom, a liquid soap for bathroom, a liquid shampoo, a liquid conditioner, cosmetics, such as a lotion and a milky lotion, a vacuum heat insulating material, and a battery.

### EXAMPLES

Hereinbelow, the present invention will be described in more detail with reference to the following specific Synthesis Examples and Examples, which should not be construed as limiting the scope of the present invention. In the following Examples, the "part(s)" and "%" indicate "part(s) by mass" and "% by mass", respectively, unless otherwise specified.

### (Example 1)

### (Step 1)

Into a reaction vessel equipped with a stirrer, a thermometer, a nitrogen gas introducing pipe, and a condenser were charged 835.2 parts of 2,4-toluene diisocyanate as a toluene diisocyanate (o), 208.8 parts of 2,6-toluene diisocyanate, and 134.0 parts of trimethylolpropane as a polyol (p), and the resultant mixture was heated to 90°C in a nitrogen gas flow while stirring, and subjected to reaction at 90°C for 2 hours, obtaining a composition comprising a polyurethane polyisocyanate (A1) and a toluene diisocyanate (o').

### (Step 2)

The composition obtained in the step 1 was purified using a thin-film distillation apparatus at a pressure of about 0.02 Torr and at a temperature of 160°C, removing the unreacted toluene diisocyanate (o'). Thus, a polyisocyanate composition (X-1) was obtained. The ratio of 2,4-toluene diisocyanate and 2,6-toluene diisocyanate in the recovered toluene diisocyanate (o') was 7:3.

### (Step 3)

Into a reaction vessel equipped with a stirrer, a thermometer, a nitrogen gas introducing pipe, and a condenser were charged 522 parts of the toluene diisocyanate (o') recovered in the step 2 as a toluene diisocyanate (q), 417.6 parts of 2,4-toluene diisocyanate, 104.4 parts of 2,6-toluene diisocyanate, and 134.0 parts of trimethylolpropane as a polyol (r), and the resultant mixture was heated to 90°C in a nitrogen gas flow while stirring, and subjected to reaction at 90°C for 2 hours, obtaining a composition comprising a polyurethane polyisocyanate (A-2) and a toluene diisocyanate (q').

### (Step 4)

The composition obtained in the step 3 was purified using a thin-film distillation apparatus at a pressure of about 0.02 Torr and at a temperature of 160°C, removing the toluene diisocyanate (q'). Thus, a polyisocyanate composition (X-2) was obtained.

Physical properties of the polyisocyanate composition (X-1) and polyisocyanate composition (X-2) were shown in Table 1. It was found that, by employing the method of the present invention, even when using the toluene diisocyanate recovered from the production process, there can be obtained a polyurethane polyisocyanate comparable to one which is obtained in the case where the toluene diisocyanate recovered from the production process is not used.

**[Table 1]**

| | | NCO% | Isocyanate monomer content [% by mass] |
|---|---|---|---|
| Reference Example 1 | X-1 | 17.0 | 0.04 |
| Example 1 | X-2 | 17.0 | 0.04 |

## Claims

1. A method for producing a polyurethane polyisocyanate, comprising the steps of:
reacting a toluene diisocyanate (o), which comprises 2,4-toluene diisocyanate and 2,6-toluene diisocyanate and which has a 2,4-toluene diisocyanate content of 50 to 90% by mass, and a polyol (p) under conditions wherein the amount of the isocyanate groups of the toluene diisocyanate (o) is two times or more that of the hydroxyl groups of the polyol (p), obtaining a composition comprising a polyurethane polyisocyanate (A1) and a toluene diisocyanate (o') (step 1);
removing the toluene diisocyanate (o') from the composition obtained in the step 1 (step 2);
reacting a toluene diisocyanate (q), which is obtained by adding 2,4-toluene diisocyanate to at least part of the toluene diisocyanate (o') so that the resultant toluene diisocyanate (q) has a 2,4-toluene diisocyanate content of 50 to 90% by mass, and a polyol (r) under conditions wherein the amount of the isocyanate groups of the toluene diisocyanate (q) is two times or more that of the hydroxyl groups of the polyol (r), obtaining a composition comprising a polyurethane polyisocyanate (A2) and a toluene diisocyanate (q') (step 3); and
removing the toluene diisocyanate (q') from the composition obtained in the step 3 (step 4).

2. The method for producing a polyurethane polyisocyanate according to claim 1, wherein the toluene diisocyanate (q) is obtained by adding 2,4-toluene diisocyanate and 2,6-toluene diisocyanate to at least part of the toluene diisocyanate (o') so that the resultant toluene diisocyanate (q) has a 2,4-toluene diisocyanate content of 50 to 90% by mass.

3. The method for producing a polyurethane polyisocyanate according to claim 1, wherein the polyurethane polyisocyanate (A1) and the polyurethane polyisocyanate (A2) are the same.

4. The method for producing a polyurethane polyisocyanate according to claim 1, wherein the polyurethane polyisocyanate (A1) and the polyurethane polyisocyanate (A2) are different from each other.

5. The method for producing a polyurethane polyisocyanate according to claim 1, wherein the toluene diisocyanate (o') and the toluene diisocyanate (q') are stored in the same container.

6. The method for producing a polyurethane polyisocyanate according to claim 1, wherein the toluene diisocyanate (o') and the toluene diisocyanate (q') are stored in different containers.

7. The method for producing a polyurethane polyisocyanate according to claim 1, wherein the removal of the toluene diisocyanate (o') in the step 2 is conducted by passing the composition through a distillation apparatus 1 and a distillation apparatus 2 which are connected in series, and a toluene diisocyanate (o'-1) recovered from the distillation apparatus 1 and a toluene diisocyanate (o'-2) recovered from the distillation apparatus 2 are stored in the same container.

8. The method for producing a polyurethane polyisocyanate according to claim 1, wherein the removal of the toluene diisocyanate (o') in the step 2 is conducted by passing the composition through a distillation apparatus 1 and a distillation apparatus 2 which are connected in series, and a toluene diisocyanate (o'-1) recovered from the distillation apparatus 1 and a toluene diisocyanate (o'-2) recovered from the distillation apparatus 2 are stored in different containers.

9. A polyisocyanate composition comprising a polyurethane polyisocyanate obtained by the method according to any one of claims 1 to 8.

10. A two-pack curing-type composition comprising the polyisocyanate composition according to claim 9 and an isocyanate reactive composition.

11. A two-pack curing-type composition comprising the polyisocyanate composition according to claim 9 and a polyol composition.

12. A laminated material comprising a first substrate, a second substrate, and an adhesive layer for laminating the first substrate and the second substrate, wherein the adhesive layer is a cured film of the two-pack curing-type adhesive according to claim 11.

13. A packaging material comprising the laminated material according to claim 12.
